Europäisches Patentamt

European Patent Office

Office européen des brevets

(19)

(11) Veröffentlichungsnummer: **0 120 144**
**A1**

(12) **EUROPÄISCHE PATENTANMELDUNG**

(21) Anmeldenummer: **83113214.7**

(22) Anmeldetag: **29.12.83**

(51) Int. Cl.³: **A 01 K 91/00**

(30) Priorität: **11.03.83 DE 3308715**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **Cormoran Sportartikel-Vertrieb von Keller und Willenbruch GmbH
Benzstrasse 20
D-8031 Puchheim(DE)**

(72) Erfinder: **Schuster, Reinhold
Peter-Rosegger-Strasse 49
D-8039 Puchheim(DE)**

(74) Vertreter: **Schaumburg, Schulz-Dörlam & Thoenes
Mauerkircherstrasse 31 Postfach 86 07 48
D-8000 München 86(DE)**

(54) Fliegenvorfach.

(57) Ein Fliegenvorfach für Angelgeräte ist ausgehend von einem seiner Enden auf einem Teil seiner Länge mit einer Ummantelung (14) versehen.

Fig. 1

Croydon Printing Company Ltd.

Fliegenvorfach

Die Erfindung betrifft ein Fliegenvorfach für Angelgeräte. Ein solches Fliegenvorfach wird in Verbindung mit einer Fliegenschnur und einer Fliegenrute zum sogenannten Fliegenfischen verwendet.

Derzeit bekannte Fliegenvorfächer bestehen üblicherweise aus einer sich von einem Ende zum anderen Ende hin kontinuierlich verjüngenden monofilen Kunststoffschnur oder aus einer Vielzahl einzelner Teilstücke mit jeweils konstantem Durchmesser, wobei die Verjüngung des Vorfaches dadurch erreicht wird, daß die Einzelstücke unterschiedlichen Durchmesser aufweisen.

In der Praxis hat sich gezeigt, daß die bekannten Fliegenvorfächer nur ein mäßiges Streckverhalten beim Wurf zeigen und leicht knicken. Bei monofilen Vorfächern kann aus herstellungstechnischen Gründen eine Verjüngung des Vorfaches nur in begrenztem Umfange erreicht werden. Dieser Nachteil läßt sich zwar bei der Herstellung des Fliegenvorfaches aus miteinander verknoteten oder verschweißten monofilen Einzelfäden beseitigen, jedoch ist diese Herstellung aufwendiger und das resultierende Vorfach ungünstiger zu handhaben.

Die bekannten Vorfächer weisen zudem den Nachteil auf, daß spezielle Schwimm- oder Sinkpräparate an der glatten Oberfläche des Vorfaches nur schlecht haften.

Der Erfindung liegt die Aufgabe zugrunde, unter Vermeidung der vorstehend beschriebenen Nachteile ein Fliegenvorfach anzugeben, das einfach herzustellen ist, ein gutes Streckverhalten zeigt und hinreichend robust bei der Handhabung ist.

Diese Aufgabe wird erfindungsgemäß dadurch gelöst, daß das Fliegenvorfach ausgehend von einem seiner Enden auf einem Teil seiner Länge mit einer Ummantelung versehen ist.

Durch diese Lösung ist es möglich, das Fliegenvorfach auf dem ummantelten Teil relativ steif auszubilden, so daß sie sich beim Wurf gut streckt. Durch die Ummantelung ist das Vorfach nicht so empfindlich gegen Knicken. Schließlich kann anstelle einer sich kontinuierlich verjüngenden Vorfachseele auch eine solche mit gleichbleibendem Durchmesser verwendet werden. Der Durchmesserunterschied und somit auch der Gewichtsunterschied zwischen den verschiedenen Bereichen des Fliegenvorfaches ergibt sich dann durch das Aneinanderknoten verschieden dicker Segmente.

Die Ummantelung kann auf einfache Weise von einem auf die Vorfachseele aufgeschobenen Schlauch gebildet sein, der zweckmäßigerweise wenigstens an einer Stelle mit einem Tropfen Klebstoff oder Lack befestigt wird, so daß er auf der Seele nicht verrutschen kann. Vorzugsweise besteht die Ummantelung aus einem Geflecht, das ebenso wie die Seele aus unter den Warenzeichen Nylon oder Perlon bekannten Polyamiden hergestellt sein kann.

Bei einer sich von ihrem einen Ende zu ihrem anderen Ende hin verjüngenden Vorfachseele geht die Ummantelung von dem durchmessergrößeren Ende aus. Sie erstreckt sich vorzugsweise über ca. 50% der Länge des Fliegenvorfaches.

Ein großer Vorteil des erfindungsgemäßen Fliegenvorfaches liegt darin, daß die Ummantelung insbesondere bei der Herstellung aus einem Geflecht eine raue Oberfläche aufweist und daher gut spezielle Schwimm- oder Sinkpräparate aufnehmen und halten kann. Der ummantelte Teil des Fliegenvorfaches kann somit vor dem Gebrauch in Lack oder ein Schwimm- oder Sinkpräparat eingetaucht werden. Das Fliegenvorfach kann aber selbstverständlich auch ohne diese Vorbehandlung verwendet werden.

Schließlich hat sich gezeigt, daß das erfindungsgemäße Fliegenvorfach auch windunempfindlicher als herkömmliche Fliegenvorfächer ist. Es ist knickunempfindlich und läßt sich leicht gerade ziehen.

Die folgende Zeichnung erläutert die Erfindung anhand von Ausführungsbeispielen. Die vier Figuren zeigen jeweils eine schematische Ansicht einer Ausführungsform des erfindungsgemäßen Fliegenvorfaches.

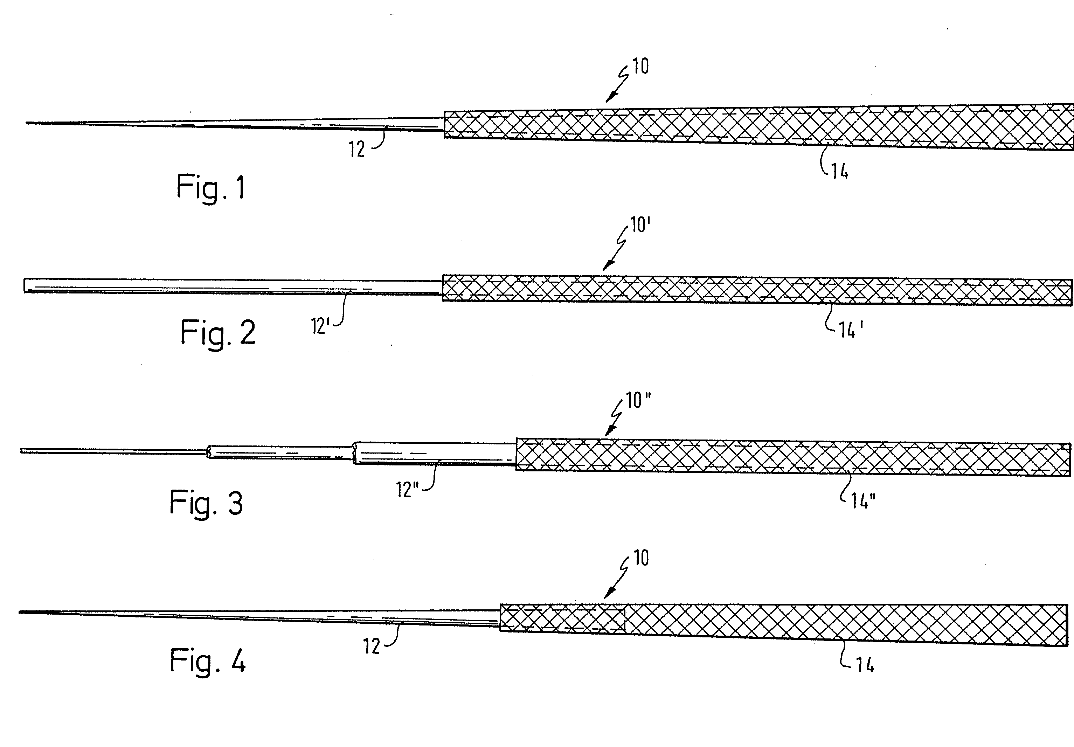

In Fig. 1 erkennt man ein allgemein mit 10 bezeichnetes Fliegenvorfach, das in einem stark verkürzten Maßstab dargestellt ist. Das Fliegenvorfach 10 umfaßt eine sich von ihrem einen Ende zu ihrem anderen Ende hin konisch verjüngende monofile Vorfachseele 12, die ausgehend von ihrem durchmessergrößeren Ende mit einer Ummantelung 14 versehen ist. Diese besteht aus einem schlauchförmigen Geflecht aus monofilen Einzelfäden. Die monofilen Einzelfäden bestehen ebenso wie die Vorfachseele 12 vorzugsweise aus einem unter dem Warenzeichen Nylon bekannten Polyamid. Der Geflechtschlauch 14 wird auf die Vorfachseele 12 aufgeschoben und durch einen Tropfen Lack oder Klebstoff an der Seele 12 gegen ein Verrutschen festgelegt.

Fig. 2 zeigt ein Fliegenvorfach 10', das sich von dem in der Fig. 1 dargestellten Fliegenvorfach 10 nur dadurch unterscheidet, daß die Vorfachseele 12' von einem monofilen Einzelfaden konstanten Durchmessers gebildet ist. Für die Ummantelung 14' kann der gleiche Geflechtschlauch wie für die Ummantelung 14 bei der Ausführungsform gemäß Fig. 1 verwendet werden. Der Schlauch selber paßt sich aufgrund seiner Struktur einer zylindrischen oder einer konischen Seele an.

Das Fliegenvorfach 10" gemäß Fig. 3 unterscheidet sich von den beiden anderen Ausführungsformen dadurch, daß die Vorfachseele 12" aus monofilen Einzelfäden unterschiedlichen Durchmessers aufgebaut ist, die miteinander verknotet oder auf andere Weise miteinander verbunden sind. Jeder Einzelfaden für sich besitzt einen konstanten Durchmesser. Die Ummantelung 14" ist wie bei den vorher beschriebenen Ausführungsformen von einem Geflechtschlauch gebildet.

Fig. 4 schließlich zeigt ein Fliegenvorfach, dessen Seele 12 und Ummantelung 14 z. B. mit den entsprechenden Elementen der in der Fig. 1 dargestellten Ausführungsformen übereinstimmen, bei dem jedoch die Ummantelung 14 nur auf einen Teil ihrer Länge die Seele 12 umschließt, also über diese hinausragt.

P a t e n t a n s p r ü c h e

1. Fliegenvorfach für Angelgeräte, d a d u r c h   g e -
   k e n n z e i c h n e t , daß es ausgehend von einem
   seiner Enden auf einem Teil seiner Länge mit einer Ummantelung (14, 14', 14") versehen ist.

2. Fliegenvorfach nach Anspruch 1, d a d u r c h   g e -
   k e n n z e i c h n e t , daß die Ummantelung (14,
   14', 14") von einem auf die Vorfachseele (12, 12', 12")
   aufgeschobenen Schlauch gebildet ist.

3. Fliegenvorfach nach Anspruch 1 oder 2, d a d u r c h
   g e k e n n z e i c h n e t , daß die Ummantelung
   (14, 14', 14") von einem Geflecht gebildet ist.

4. Fliegenvorfach nach Anspruch 3, d a d u r c h   g e -
   k e n n z e i c h n e t , daß das Geflecht aus monofilen Einzelfäden hergestellt ist.

5. Fliegenvorfach nach einem der Ansprüche 1 bis 4, d a -
   d u r c h   g e k e n n z e i c h n e t , daß bei
   einer sich von ihrem einen Ende zu ihrem anderen Ende hin verjüngenden Vorfachseele (12, 12") die Ummantelung (14, 14") von dem durchmessergrößeren Ende ausgeht.

6. Fliegenvorfach nach einem der Ansprüche 1 bis 5, d a -

**0120144**

durch gekennzeichnet, daß die Ummantelung (14, 14', 14") an wenigstens einer Stelle mit
der Vorfachseele (12, 12', 12") verbunden ist.

7. Fliegenvorfach nach einem der Ansprüche 1 bis 6, d a -
durch gekennzeichnet, daß die Ummantelung (14, 14', 14") sich über ca. 50% der Länge
des Fliegenvorfaches (10, 10', 10") erstreckt.

Fig. 1

Fig. 2

Fig. 3

Fig. 4

1/1

0120144

Europäisches
Patentamt

**EUROPÄISCHER RECHERCHENBERICHT**

Nummer der Anmeldung

0120144

EP 83 11 3214

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A- 692 940 (HEDGE) <br><br> * Seite 1, Zeilen 22-31 * <br><br> --- | | A 01 K 91/00 |
| A | GB-A- 778 095 (GANSON) <br><br> --- | | |
| A | US-A-2 933 798 (MILLER) <br><br> --- | | |
| A | US-A-3 758 979 (MARTUCH) <br><br> --- | | |
| A | US-A-3 453 769 (CHANDLER) <br><br> --- | | |
| A | CH-A- 384 277 (FARBWERKE HOECHST AG) <br><br> ----- | | |

| | | RECHERCHIERTE SACHGEBIETE (Int. Cl. 3) |
|---|---|---|
| | | A 01 K |

Der vorliegende Recherchenbericht wurde für alle Patentansprüche erstellt.

| Recherchenort <br> DEN HAAG | Abschlußdatum der Recherche <br> 27-03-1984 | Prüfer <br> VERDOODT S.J.M. |
|---|---|---|